# EUROPEAN PATENT APPLICATION

(11) **EP 2 227 968 A1**
(43) Date of publication of application: **15.09.2010**
(21) Application number: 09154718.2
(22) Date of filing: 10.03.2009
(51) Int. Cl.: A23L 1/164, A23L 1/216, A23L 1/217, A21C 3/06

(54) **A method of producing foodstuffs, and oven for drying and/or heating flat pieces of dough, a rolled foodstuff and a device for rolling flat pieces of dough**

(71) Applicant: Kraft Foods R & D, Inc., Northfield, IL 60093-2753 (US)
(72) Inventor: Tekcan, Tugberk K.Bakkalkoy Mh.Dereboyu Cd. Doruk Sk., Istanbul 34750 (TR); Bazna, Orhan, 34751 Atasehir, Istanbul (TR); Pur, Bulent, Istanbul 81520 (TR)
(74) Representative: HOFFMANN EITLE

(57) **Abstract**

A method of producing foodstuffs from corn or potato based dough comprises the steps of preparing the dough, flattening the dough, cutting pieces from the flattened dough, passing the cut pieces through an oven to dry and/or heat them, and rolling the pieces of dough to form hollow tubes during or immediately after at least some drying and/or heating has occurred. An oven for drying and/or heating flat pieces of dough has at least one device for rolling the flat pieces of dough during or immediately after drying. A rolled foodstuff made of flat pieces of corn or potato based dough rolled to hollow tubes, has a fat content of 18 to 26, preferably 20 to 24 per cent measured without seasoning. A device for rolling flat pieces of dough such as a hanging curtain, is adapted to be positioned inside an oven.

## Description

### Technical Field

The invention relates to a method of producing foodstuffs, an oven for drying and/or heating flat pieces of dough, a rolled foodstuff and a device for rolling flat pieces of dough.

In the field of foodstuffs different types of savoury snack products such as potato or corn chips, in particular tortilla chips, or crisps are known. These can have various shapes, such as corrugated, rolled or arbitrary shapes, which may result from the frying process.

### Background Art

WO 97 00023 A1 is related to a snack product made from discrete shapes of dough, which may be subjected to a treatment step in which the moisture content is reduced. The final product may have a corrugated shape.

US 6 393 974 A describes an apparatus for rolling pieces of corn dough before cooking and frying them to produce tortilla chips. However, special measures are necessary to avoid sticking of the dough pieces to the equipment involved. Further, the final tortilla chips are expected to have a relatively high fat content.

### Summary of the Invention

The invention provides a method of producing foodstuffs, an oven for drying and/or heating flat pieces of dough and a device for rolling flat pieces of dough with which rolled snack products having a reduced fat content can be produced in a reliable manner. Further, a rolled foodstuff with a relatively low fat content is provided by the invention.

To this end, a method of producing foodstuffs from a corn or potato based dough comprises the steps of preparing and flattening the dough, cutting pieces from the flattened dough and passing the cut pieces through an oven to dry and/or heat them. Finally, the pieces of dough are rolled to form hollow tubes during or immediately after at least some drying and/or heating has occurred. The invention is based on the finding, but not limited thereto, that drying the pieces of dough, for example by applying heat in a suitable oven, evaporates some moisture contained in the dough and/or pregelatinizes the dough and/or forms a kind of surface film on the dough. It has been found that the pieces of dough pregelatinized. In this manner have a significantly reduced tendency to stick to the equipment used to roll them.

This equipment may for example be a so-called hanging curtain, which may comprise one or more tabs or flaps suspended in a manner to hang down onto the surface of a conveyor, such as a conveyor belt, on which the pieces of dough are transported. The conveyor, such as belt, provided in the oven may be hot or heated so as to provide the drying of the pieces of dough described above and/or the toast points described below. As those skilled in the art will realize, the leading edge of a piece of dough will be "caught" or engaged by the hanging curtain and will, as a consequence, be rolled onto the remainder of the piece of dough, as the conveyer still transports the piece of dough toward the hanging curtain, and the hanging curtain is stationary. This rolling process continues, until the trailing edge of the piece of dough arrives, and the rolled piece of dough "exits" underneath the hanging curtain on the conveyer. As an alternative, a roll rotating in a direction opposite the moving direction of the conveyer may be provided with its cylindrical surface appropriately spaced from the conveyer belt so as to engage the leading edge of a piece of dough and roll same. In this case, measures are provided to allow the rolled piece of dough to exit between the conveyor and the roller.

In any case, it has been found that rolling the pieces of dough during the drying and/or heating of the same, leads to reduced sticking to the described devices provided for rolling, and reliability of the process can be remarkably improved. Further, down times of the machinery can be shortened. The described reduction of the moisture content in the dough has the additional advantage of reducing the fat content in the final product. Experiments have been conducted and prove the effect that a high moisture content leads to a high oil and/or fat absorption. Thus, reducing the moisture content already before rolling reduces the product tendency to absorb fat in the later frying process. Thus, a final product with a reduced fat content, as desired, can be obtained. Further, the texture throughout the final product will be more uniform. I.e. it has been found for a product which has been rolled before entering the oven, that the texture is crunchy on the outside, but harder on the inside, depending on the frying time, whereas the texture of products produced in accordance with the method described herein has been found to be substantially uniform. Further, drying and/or heating the pieces of dough already before rolling aids to give the pieces of dough a defined shape, which they keep during rolling more reliably than an "undried" piece of dough. It appears that the drying before rolling gives the pieces of dough a kind of "shape memory" so that the pieces of dough advantageously keep this general shape during the rolling, and even during the later frying. In summary, the dried and/or heated pieces of dough can be called "semi-cooked" and provide the mentioned advantages in the subsequent processes, such as rolling and frying. It has also been found, that the "shape memory" is enhanced by a conditioning step which may be performed after the rolling and/or drying and before the frying process. A conditioning step may be performed in ambient temperature, i.e. without any measures to reduce the temperature below ambient temperature. The conditioning step serves to equalize the moisture content in the rolled pieces of dough. This has been found to be beneficial with regard to the dough pieces' behavior during frying. In particular, these will keep their (rolled) shape well when the above-mentioned conditioning step is carried out for a sufficient time period to substantially equalize the moisture content throughout the piece of dough. The dough used may be any common corn or potato based dough and does not need any modification for being usable in the present invention. This also applies to the process of flattening the dough, which may be performed by a well known apparatus which can be called a sheeter. Cutting separate pieces from the flattened dough may for example be accomplished by a roll having cutters forming the desired shapes, such as elliptical or octagonal around its circumference. Other shapes, such as triangular or circular, are also conceivable. Any dough material remaining between the cutters forming the desired shapes may stick to the mentioned roll and may in this manner be removed from the conveyor transporting the flattened dough. At a location generally opposite the conveyor, the described, remaining material may be removed from the roll cutter.

In connection with the present invention, a generally known oven for cooking pieces of dough before frying same may be used. In contrast to previously known ovens which have, located upstream or "before" such a device for rolling pieces of dough, the invention may for example be realized by an oven having a device for rolling flat pieces of dough "inside", i.e. somewhere along the drying area. In this manner, some drying has already occurred, when the pieces of dough are rolled, and rolling may even occur while the drying continues. In other words, the flat pieces of dough or "sheeted dough pieces" enter the oven unrolled.

As regards the dough used in connection with the present invention, best results have been found with dough's which have less than 10 per cent gluten and/or less than 9 per cent sugar or sugar substitutes. Limiting these ingredients by the mentioned values will aid in avoiding the described sticking problems. Any remaining tendency of the pieces of dough to stick to the equipment used for rolling them can be further reduced as described above.

First experiments show that superior results can be obtained by pieces of dough which have a substantially elliptical or octagonal shape.

Further, during the drying and/or heating toast points, i.e. points where more heat is applied so as to "toast" the dough at some points may be produced during drying and/or heating.

Whereas the step of rolling the pieces of dough may be immediately followed by frying the rolled pieces without further drying and/or heating, it is currently preferred to conduct further drying and/or heating after the rolling. This will render the shape of the rolled pieces of the dough even more stable which aids in mass producing of the described products in a reliable manner.

As mentioned before, the rolled pieces of dough may typically be fried in order to produce a crispy snack product.

The invention can also be seen in an oven for drying, heating and/or cooking flat pieces of dough which has at least one device for rolling the flat pieces of dough during or immediately after drying same. Thus, in a manner which significantly differs from the known approaches, rolling is not conducted before flat pieces of dough enter the oven, i.e. in a relatively wet state, but the oven is equipped with the device for rolling the flat pieces of dough, so that the oven has already performed some drying and/or heating, when the pieces of dough reach the device for rolling and can, therefore, be rolled in a semi-dry or semi-cooked state which leads to the above described advantages.

As far as the device for rolling the flat pieces of dough is concerned, good experimental results have been achieved with hanging curtains. In this context, the flat pieces of dough can be conveyed through the oven in plural lanes, i.e. with plural pieces placed one after another in the conveying direction, and a plurality of such lanes located adjacent each other. Particularly in this case, it has proven efficient for uniform rolling, when plural hanging curtains, each having essentially the shape of a flap, are located adjacent each other corresponding to the lanes of pieces of dough. In this manner, each piece of dough has a good chance of getting into contact with "its" hanging curtain without being affected by the interaction of adjacent pieces of dough with the adjacent hanging curtains.

In order to produce properly rolled pieces of corn or potato dough, the described oven may have at least one conveyor for passing the flat pieces of dough through the oven and "underneath" the device for rolling the flat pieces of dough. Particularly with the above described method and/or the oven according to the invention, the invention also provides rolled foodstuffs made of flat pieces of corn or potato based dough having a fat content of 18 to 26, particularly 20 to 24 per cent. This corresponds to a relatively low and, therefore, desirable fat content from the consumer's view and is, in a reliable manner, realizable by the above described measures. Any details of the final product described above with reference to the method of producing them, such as the characteristics of the dough and/or the preferred shape of the pieces of dough are applicable to the rolled foodstuff described herein.

Finally, in order to modify an oven in a manner to enable the method described herein to be realized, the invention also suggests a device for rolling flat pieces of dough, such as a hanging curtain, adapted to be positioned inside an oven. In other words, the described device is made of materials and has overall characteristics which withstand the temperatures and relatively dry conditions inside an oven for cooking the foodstuffs described herein. The temperature in the oven may be in a range of 250 - 450°C, with a range of 350 - 450°C occurring at the location (for example the first conveyer belt as described below) where the device for rolling flat pieces of dough may be retrofit to the oven. This proposal is based on the idea, that existing ovens for drying, heating or cooking flat pieces of dough do not need any other modification than adding a device for rolling flat pieces of dough inside the oven, in order to realize the invention. In other words, the device for rolling flat pieces of dough may be retrofit to an existing oven in order to allow the reliable production of rolled snack products advantageously having a reduced fat content. Further, the described device for rolling flat pieces of dough may be removed again in order to allow the production of "regular", i.e. substantially flat snack products.

### Brief Description of the Drawings

Hereinafter, the invention will be further described with reference to currently preferred embodiments thereof and examples and with reference to the drawings, in which
- Fig. 1: shows production equipment which may be used in the present invention,
- Fig. 2: shows a detail of Fig. 1, and
- Fig. 3: shows a perspective view of the product described herein.

### Description of the Preferred Embodiments of the Invention

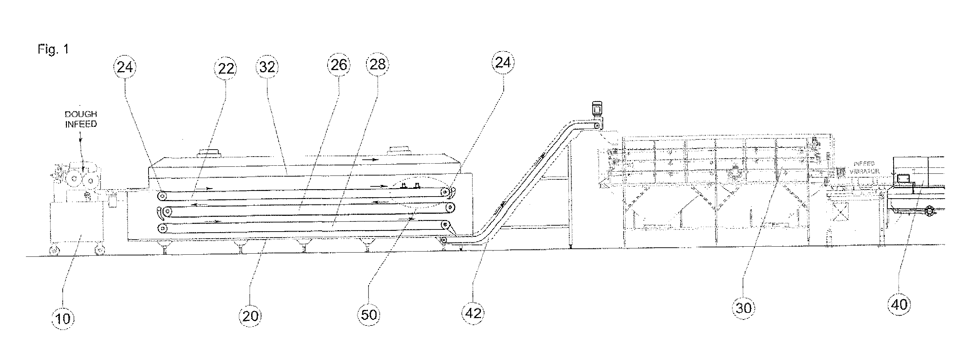

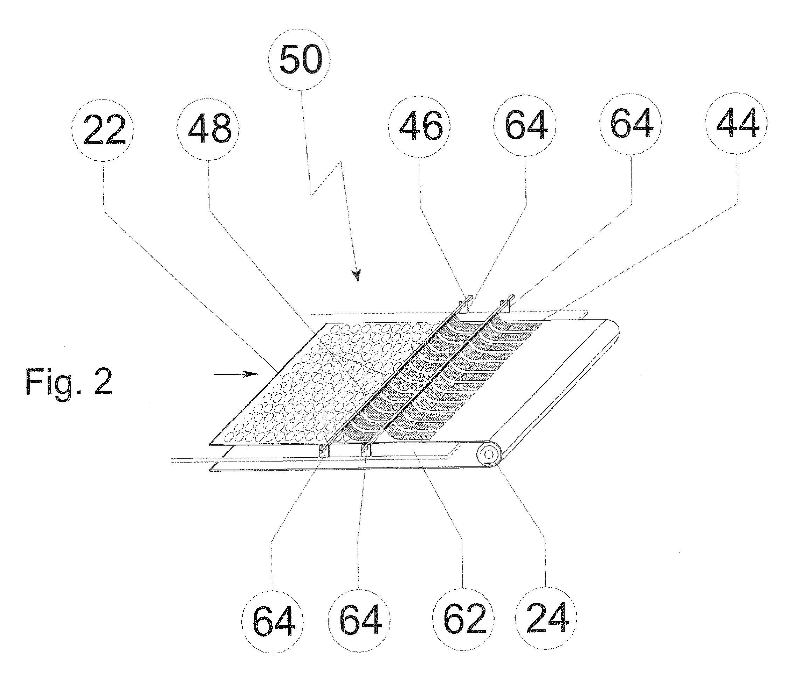

As can be seen in Fig. 1, the method described herein may be realized by machinery having a sheeter 10, an oven 20, a conditioning belt 30 and a fryer 40. Generally, a suitable dough is supplied to the sheeter 10 which produces a generally flat sheet of dough. Discrete pieces of flattened dough may be cut from the sheet of dough by suitable equipment, which is not shown in the drawings. Conventionally, the cut pieces of dough are rolled before they enter the oven 20. In accordance with the method described herein, the pieces of dough enter the oven 20 in an unrolled state and are subjected to drying while they are conveyed inside the oven by a first conveyer belt 22. The conveyer belt 22 may for example be formed as an endless belt wound around two rollers 24. This general structure is also applicable to further conveyers 26, 28, and it should be noted that the oven may have less or more conveyors than the three conveyers shown in Fig. 1. The inside of the oven 20 may for example be heated by infrared burners (not shown) which may be present in the upper part 32 of the oven. As can be taken from the arrows shown in Fig. 1, the pieces of dough are transported towards a device 50 for rolling them which will be described in more detail with reference to Fig. 2. As will be appreciated from Fig. 1, some drying occurs on the dough pieces' way from the beginning of the conveyor to the device 50 for rolling them. As a consequence, the pieces of dough are semi-dry and rolled at the end of the first conveyer 22, where they fall onto the second conveyer 26. Further drying occurs while the rolled pieces of dough travel on the second conveyer 26. At the end of the second conveyer 26 (on the left side of Fig. 1) they fall onto the third conveyer 28 and are dried further and transported to a conditioning belt 30 with an inclined belt 42. The time which the rolled pieces of dough spend on this conveyor can advantageously be used to equalize and homogenize the moisture distribution in the dough. The conveyor 42 serves only to lift them over the rim of the conditioning belt 30. After the conditioning belt the rolled pieces of dough drop into the fryer 40 for frying.

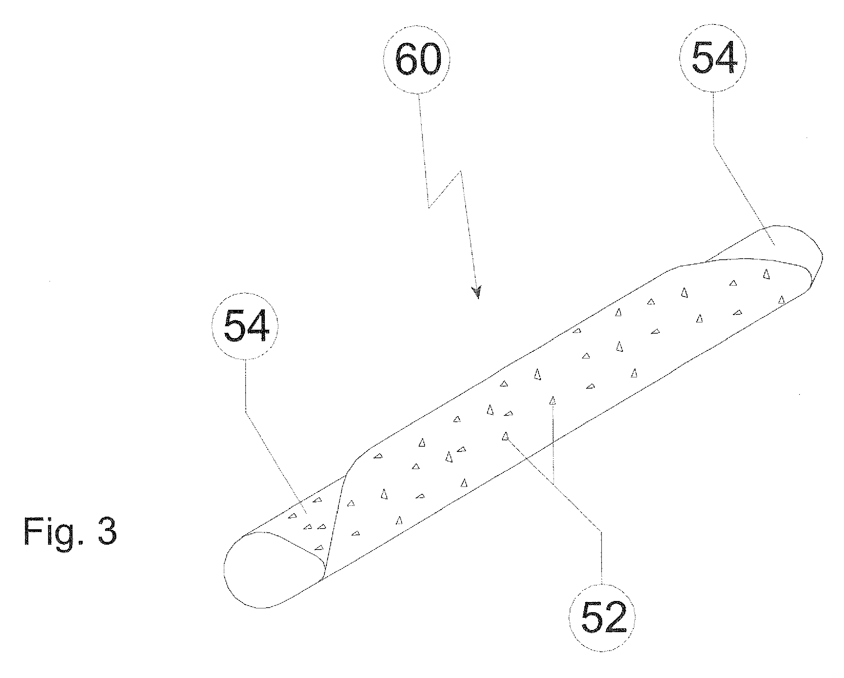

Details of the device 50 for rolling the semi-dry pieces of dough can be taken from Fig. 2. In the embodiment shown, two hanging curtains are provided in the form of plural tabs or flaps 44 of the flexible material, which are located closely adjacent each other and each suspended from a bar or rod 46 extending across the conveyor 22. In particular, the flaps 44 have a length which is sufficient to place a part of them flat on the conveyor 22, so that they can engage the leading edge of the cut pieces of dough denoted 48. As described above, the flaps 44 engage the leading edge of the pieces of dough 48 and roll the leading edge back onto the remainder of the dough piece as the conveyor keeps transporting the dough piece towards the flaps 44. Thus, a rolled, substantially hollow tube (see Fig. 3) is produced which, afterwards, exits underneath the tabs. An additional hanging curtain, disposed downstream of the first hanging curtain, is provided to finish rolling if necessary. As can be seen from Fig. 2, the hanging curtains can easily be dismounted by removing the bars 46 including the tabs 44 attached thereto. In a similar manner, an existing oven which is merely provided for drying flat pieces of dough, can easily be modified by adding the hanging curtains shown in Fig 2 to produce rolled pieces of dough. As shown as an example in Fig. 2, the bars 46 carrying the flaps 44 of the hanging curtain may simply be laid into substantially U-shaped holders 64 provided on the oven frame 62.

The rolled foodstuff produced by the method and apparatus described above is shown in a perspective view in Fig. 3 and denoted 60. As can be taken from the drawing, the foodstuff has substantially the shape of a hollow tube produced by rolling a piece of dough 48 (see Fig. 2), further drying and then frying it. In connection with drying, toast points 52 may be produced. Due to the elliptical (as compared to a rectangular) shape of the piece of dough 48, the edges 54 are diverted towards the center of the foodstuff 60 on the outside thereof.

### Examples

Examples have been prepared and experiments have been conducted with a dough having the following compositions:

| **Raw materials & Ingredients** | **Potato Product rolled prior the** **oven** **Raw material usage for 100kg** **Finished Product** | **Potato Product rolled in** **the oven** **Raw material usage for** **100kg Finished Product** |
|---|---|---|
| **Dehydrated potatoes** | **40,32** | **46** |
| **Vegetable oil** | **40,4** | **32** |
| **Corn flour** | **7,84** | **11** |
| **Flavour** | **7,5** | **7,5** |
| **Maltodextrin** | **4,2** | **5** |
| **Wheat starch** | **4,2** | **5** |
| **Emulsifier E471** | **1** | **1,1** |
| **Salt** | **0,515** | **0,515** |
| **Dextrose** | **0,309** | **0,309** |
| **Rice flour** | **0,21** | **0,21** |

| **Raw materials & Ingredients** | **Corn Tortilla rolled prior to** **oven** **Raw material usage for 100kg** **Finished Product** | **Corn Tortilla rolled in the** **oven** **Raw material usage for** **100kg Finished Product** |
|---|---|---|
| **Corn** | **86** | **96** |
| **Vegetable oil** | **30** | **22** |
| **Fivavour** | **7,5** | **7,5** |
| **Lime** | **0,9** | **1** |

This corn dough was used to produce a flat tortilla chip, as well as a rolled tortilla chip, the dough pieces of which had been rolled before entering the oven, and a tortilla chip produced by the method described above. Table 1 lists the parameters involved:

| | **Current tortilla** | **Rolled tortilla** **prior to the oven** | **Rolled tortilla** **in the oven** |
|---|---|---|---|
| **Dough and Oven** | Limit- Target - Limit | Limit- Target - Limit | Limit- Target - Limit |
| Dough Moisture (%) | 48%∼50%∼52% | 48%∼50%∼52% | 48%∼50%∼52% |
| Dough Temperature (°C) | 35∼42∼50°C | 35∼42∼50°C | 35∼42∼50°C |
| Tortilla Thickness (Inch) | 0.36"∼0.40"∼0.44" | 0.36"∼0.40"∼0.44" | 0.36"∼0.40"∼0.44" |
| Tortilla moisture at the first belt (%) | 41%∼44%∼47% | 41%∼44%∼47% | 41%∼44%∼47% |
| Tortilla moisture at the second belt (%) | 35%∼38%∼41% | 35%∼38%∼41% | 35%∼38%∼41% |
| Tortilla moisture at the third belt (%) | 30%∼32%∼34% | 30%∼32%∼34% | 30%∼32%∼34% |
| Oven dwell time (sec) | 15∼21∼27 sec | 15∼21∼27 sec | 15∼21∼27 sec |
| Oven temperature at the first belt (°C) | 350-450°C | 350-450°C | 350-450°C |
| Oven temperature at the second belt (°C) | 350-400°C | 350-400°C | 350-400°C |
| Oven temperature at the last belt (°C) | 250-350°C | 250-350°C | 250-350°C |
| **Frying and Finished product** | | | |
| Frying time (sec) | 40∼55∼70 sec | 40∼55∼70 sec | 40∼55∼70 sec |
| Oil Temperature inlet (°C) | 170-180-190°C | 170-180-19D°C | 170-180-190°C |
| Oil Temperature outlet (°C) | 160-170-180°C | 160-170-180°C | 160-170-180°C |
| Temperature difference in the fryer (ΔT) | 5-10-15°C | 5-10-15°C | 5-10-15°C |
| Moisture (%) | %1-1.3-1.5 | 1%-1.3%-1.5% | 1%-1.3%-1.5% |
| Oil (%) | %20-22-24 | 28%-30%-32% | 20%-22%-24% |

As can be taken from table 1, with all production parameters being substantially the same, the oil or fat content of the finished product is significantly higher, when the pieces of dough are rolled outside the oven, but can be brought into the desired range of flat tortillas, when the pieces of dough are rolled inside the oven.

Going into more detail, the fat content of several examples based on the composition of the "corn tortilla rolled in the oven" above and reference examples was measured with and without the seasoning. The reference examples were prepared in the same manner as the inventive example, but performing the rolling step before drying the pieces of dough, i.e. before they enter the oven. The results are shown in the table 2.

| | without seasoning | with seasoning |
|---|---|---|
| Example 1 | 23.75 | 22.5 |
| Example 2 | 24.17 | 22.92 |
| Example 3 | 23.09 | 21.80 |
| Example 4 | 23.08 | 22.55 |
| Example 5 | 22.5 | 21.25 |
| Ref. Example 1 | 29 | 28 |
| Ref. Example 2 | 30 | 29 |

These experiments show that rolled corn chips having a reduced fat content can be produced by the method and equipment described herein.

## Claims

1. A method of producing foodstuffs from corn or potato based dough comprising the steps of:
- preparing the dough,
- flattening the dough,
- cutting pieces (48) from the flattened dough,
- passing the cut pieces through an oven (20) to dry and/or heat them, and
- rolling the pieces of dough (48) to form hollow tubes (60) during or immediately after at least some drying and/or heating has occurred.

2. The method of claim 1, wherein the dough has less than 10 per cent gluten.

3. The method of claim 1 or 2, wherein the dough has less than 9 per cent sugar or sugar substitutes.

4. The method of one of the preceding claims, wherein the cut pieces of dough (48) have a substantially elliptical or octagonal shape.

5. The method of one of the preceding claims, wherein toast points are produced on at least one surface of the cut pieces of dough (48) during the drying and/or heating.

6. The method of one of the preceding claims, wherein further drying and/or heating is conducted after the rolling.

7. The method of one of the preceding claims, wherein frying is conducted after the drying and/or heating.

8. An oven (20) for drying and/or heating flat pieces (48) of dough having at least one device (50) for rolling the flat pieces of dough (48) during or immediately after drying.

9. The oven of claim 8, wherein the device for rolling the flat pieces of dough is at least one hanging curtain (44).

10. A rolled foodstuff made of flat pieces of corn or potato based dough (48) rolled to hollow tubes (60), having a fat content of 18 to 26, preferably 20 to 24 per cent measured without seasoning.

11. The rolled foodstuff of claim 10, wherein the dough has less than 10 per cent gluten.

12. The rolled foodstuff of claim 10 or 11, wherein the dough has less than 9 per cent sugar or sugar substitutes.

13. The foodstuff of one of claims 10 to 12 wherein the pieces of dough (48) have a substantially elliptical or octagonal shape.

14. The foodstuff of one of claims 10 to 13, further having toast points (52).

15. A device (50) for rolling flat pieces of dough such as a hanging curtain, adapted to be positioned inside an oven (20).

## Amended claims

### Amended claims in accordance with Rule 137(2) EPC.

**1.** A method of producing foodstuffs from corn or potato based dough comprising the steps of:
- preparing the dough,
- flattening the dough,
- cutting pieces (48) from the flattened dough,
- passing the cut pieces through an oven (20) to dry and/or heat them, and
- rolling the pieces of dough (48) to form hollow tubes (60) during or immediately after at least some drying and/or heating has occurred.

**2.** The method of claim 1, wherein the dough has less than 10 per cent gluten.

**3.** The method of claim 1 or 2, wherein the dough has less than 9 per cent sugar or sugar substitutes.

**4.** The method of one of the preceding claims, wherein the cut pieces of dough (48) have a substantially elliptical or octagonal shape.

**5.** The method of one of the preceding claims, wherein toast points are produced on at least one surface of the cut pieces of dough (48) during the drying and/or heating.

**6.** The method of one of the preceding claims, wherein further drying and/or heating is conducted after the rolling.

**7.** The method of one of the preceding claims, wherein frying is conducted after the drying and/or heating.

**8.** A device (50) for rolling flat pieces of dough such as a hanging curtain, wherein the device (50) is made of materials and has overall characteristics which withstand the temperatures and dry conditions inside an oven (20) for cooking the pieces of dough.

**9.** An oven (20) for drying and/or heating flat pieces (48) of dough having at least one device (50) according to claim 8 for rolling the flat pieces of dough (48) during or immediately after drying.

**10.** The oven of claim 9, wherein the device for rolling the flat pieces of dough is at least one hanging curtain (44).

**11.** A rolled foodstuff made of flat pieces of corn or potato based dough (48) rolled to hollow tubes (60), having a fat content of 18 to 24 per cent measured without seasoning.

**12.** The rolled foodstuff of claim 11, wherein the dough has less than 10 per cent gluten.

**13.** The rolled foodstuff of claim 11 or 12, wherein the dough has less than 9 per cent sugar or sugar substitutes.

**14.** The foodstuff of one of claims 11 to 13 wherein the pieces of dough (48) have a substantially elliptical or octagonal shape.

**15.** The foodstuff of one of claims 11 to 14, further having toast points (52).
